# EUROPEAN PATENT SPECIFICATION

(11) **EP 4 577 762 B1**
(45) Date of publication and mention of the grant of the patent: **01.07.2026**
(21) Application number: 23789231.0
(22) Date of filing: 05.10.2023
(51) Int. Cl.: F16K 31/122, F16K 37/00, F01D 17/14, F16K 31/56, F02C 7/232, F15B 19/00

(54) **HYDRAULIC OR PNEUMATIC ACTUATOR FOR TRIP VALVES OF STEAM TURBINES OR TURBO-EXPANDERS**
HYDRAULISCHER ODER PNEUMATISCHER STELLANTRIEB FÜR DIE AUSTRITTSDÜSE VON DAMPFTURBINEN ODER TURBOEXPANDERN
ACTIONNEUR HYDRAULIQUE OU PNEUMATIQUE POUR SOUPAPES DE SÛRETÉ DE TURBINES À VAPEUR OU DE TURBODÉTENDEURS

(30) Priority: 05.10.2022 IT 202200020475
(43) Date of publication of application: 02.07.2025
(73) Proprietor: NUOVO PIGNONE TECNOLOGIE - S.R.L., 50127 Florence (IT)
(72) Inventor: VALERI, Fabio, 50127 Florence, Firenze (IT); PAGGINI, Andrea, 50127 Florence, Firenze (IT)
(74) Representative: Novagraaf Group
(86) International application number: PCT/EP2023/025422
(87) International publication number: WO 2024/074224

(56) References cited:
- US-A1- 2022 146 016

## Description

### TECHNICAL FIELD

The subject-matter disclosed herein relates to a hydraulic or pneumatic actuator for opening and closing a valve, in particular a trip valve. More particularly, the subject-matter disclosed herein relates to a hydraulic or pneumatic actuator for a valve which allows to test its operating capacity without stopping the machine on which the valve is mounted.

### BACKGROUND ART

Currently, steam turbines or, more generally, turbo-expanders are typically provided with a trip valve upstream the fluid inlet of the machine in order to shut off the fluid supplied in the expander within the shortest of times. This is particularly important in the event of a malfunction. US 2022/146016 A1 discloses a system for monitoring and diagnostics of a hydraulic or pneumatic actuator according to the preamble of claim 1 for actuation of a valve for fluid pipelines.

Typically, trip valves are provided with a valve spindle, which is configured to close the fluid inlet of the machine, and an actuator comprising a spring. In general, trip valves are opened hydraulically or pneumatic, for example using water or oil or other suitable fluid which is pressurized, and are closed by spring force: the actuator has a housing in which are housed a sliding plate, that is mechanically coupled to the valve spindle, and a spring, that is mechanically coupled to the sliding plate; one side of the sliding plate is fluidly coupled to a chamber which contains pressurized fluid, typically pressurized oil, and the other side of the sliding plate is mechanically coupled to the spring which is pre-loaded (i.e. is compressed) in a pre- operation condition. Therefore, on the sliding plate is applied a first force due to the pressurized fluid and a second (and opposite) force due to the spring. In an operating condition, the fluid is drained from the chamber and when the pressure of the fluid drops below a predetermined value, the first force is no longer sufficient to keep the spring in its compressed position and the sudden release of the energy stored in the spring moves the sliding plate and closes the valve spindle.

In order to ensure correct valve operation during the valve operation condition, the actuator is periodically checked. For example, during the pre-operation condition, while expander is in operation, the sliding plate can be moved to some extent, in order to verify that the sliding plate and valve spindle can slide when subjected to a certain design pressure. However, known hydraulic or pneumatic actuators do not provide the ability to check the condition and full functionality of the spring without closing partially or completely the fluid inlet of the machine which may impact the expander performance or even require shut down of the expander, as a consequence of the test.

Therefore, it is desirable to have an actuator for trip valves which enables checking the correct condition of the spring without closing partially or completely the trip valve.

### SUMMARY

The present invention is defined in the accompanying claims. According to an aspect, the subject-matter disclosed herein relates to a hydraulic or pneumatic actuator for a valve, in particular a trip valve, that is housed into a cylinder comprising a lateral wall, a first end wall and a second end wall and comprises:
- a first rod which is slidably and partially housed inside the cylinder and has a first end configured to be mechanically coupled to a spindle of the valve;
- a first plate which is slidably housed in the cylinder and is configured to define a first variable volume chamber, the first plate having a first side mechanically coupled to a second end of the first rod;
- an elastic element being housed in the cylinder and having a first end mechanically coupled to a second side of the first plate and a second end mechanically coupled to the second end wall of the cylinder.

The elastic element is configured to apply a first force on the first plate, in order to move the first plate, and a second force on the second end wall, the second force being equal and opposite to the first force. The actuator further comprises a testing system which is configured to measure the second force or a third force related to the second force.

According to another aspect, the subject-matter disclosed herein relates to a turbo-expander system comprising:
- a hydraulic or pneumatic actuator comprising a spring and a testing system,
- a turbo-expander machine,
- a valve, in particular a trip valve, mechanically coupled to the actuator and fluidly coupled to a fluid inlet of the turbo-expander machine.

The valve is configured to be actuated by the hydraulic or pneumatic actuator in order to stop the fluid supply to the fluid inlet and the testing system is configured to check the correct condition of the spring without actuating the valve, i.e. without closing totally or partially the valve.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 shows a cross-sectional view of a first embodiment of an innovative actuator in a pre-operating phase,
Fig. 2 shows a cross sectional view of a second embodiment of an innovative actuator in a pre-operating phase,
Fig. 3 shows the embodiment of Fig. 1 in an operating phase,
Fig. 4 shows the embodiment of Fig. 1 in a preparation phase, and
Fig. 5 shows a turbo-expander system comprising the innovative actuator of Fig. 1 or 2.

### DETAILED DESCRIPTION OF EMBODIMENTS

According to an aspect, the subject-matter disclosed herein relates to an innovative actuator for a valve, in particular a trip valve which may be used to cut-off the fluid supplied to an expander when a fault occurs, e.g. when pressure drops under a predetermined pressure value. The innovative actuator may be a hydraulic actuator or a pneumatic actuator with a movable plate having a first side associated to a spindle of the valve through a rod and a second side associated to a spring which is configured to move the movable plate. In particular, when the valve is in open configuration, the elastic force of the spring is counteracted by the pressure of a fluid, for example oil, acting on the first side of the movable plate. When the pressure of the fluid drops, the elastic force of the spring can win the pressure force of the fluid and then the plate is moved, as well as the spindle of the valve, in order to quickly close the valve. The innovative actuator is provided with a testing system configured to measure the elastic force of the spring without closing partially or totally the valve, in order to check the correct condition of the spring and therefore its ability to close the valve correctly and quickly.

According to another aspect, the subject-matter disclosed herein relates to a turbo-expander system comprising the innovative actuator.

Reference now will be made in detail to embodiments of the disclosure, examples of which are illustrated in the drawings. The examples and drawing figures are provided by way of explanation of the disclosure and should not be construed as a limitation of the disclosure. In fact, it will be apparent to those skilled in the art that various modifications and variations can be made in the present disclosure without departing from the scope of the disclosure as defined by the appended claims. In the following description, similar reference numerals are used for the illustration of figures of the embodiments to indicate elements performing the same or similar functions. Moreover, for clarity of illustration, some references may be not repeated in all the figures.

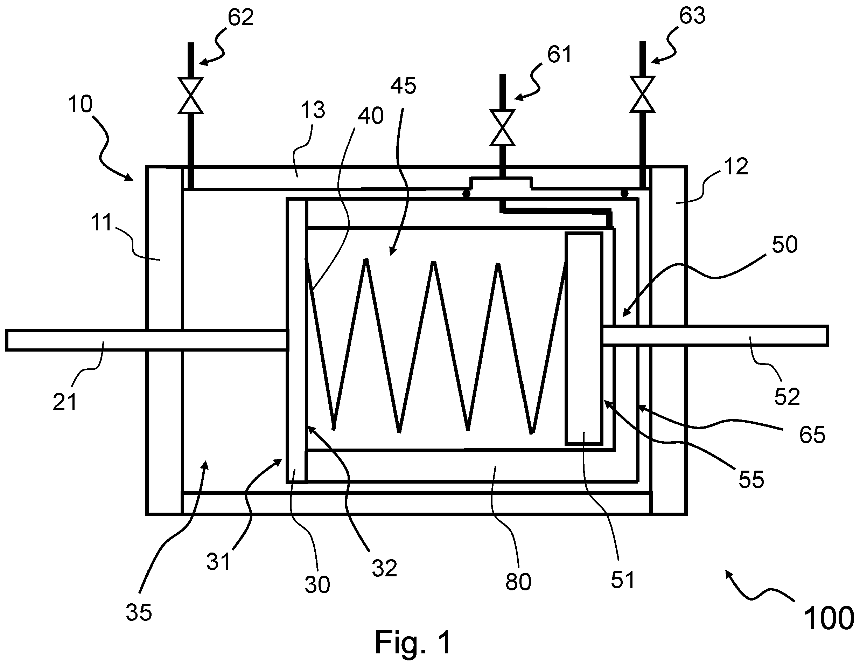

In Figure 1 there is shown a simplified a cross-sectional view of a first embodiment of an innovative actuator for a valve, in particular a trip valve, which is generally indicated with reference numeral 100. The actuator 100 is housed into a cylinder 10 which comprises a lateral wall 13, a first end wall 11 and a second end wall 12; advantageously, as it will be better described in the following, at least the first end wall 11 and possibly also the second end wall 12 have a hole, in particular a central hole, through which a rod can slide.

With non-limiting reference to Fig. 1, the actuator 100 comprises a first rod 21 which is slidably and partially housed inside the cylinder 10. Advantageously, the first rod 21 is configured to pass through a hole of the first end wall so to have a first portion which is housed inside the cylinder 10 and a second portion which protrudes from the cylinder 10 (please note that the size of the portion inside the cylinder and outside the cylinder may vary depending on the sliding position of the rod). The first rod 21 has a first end configured to be mechanically coupled to a spindle of the valve and a second end is mechanically coupled to a first plate 30, in particular to a first side 31 of the first plate 30.

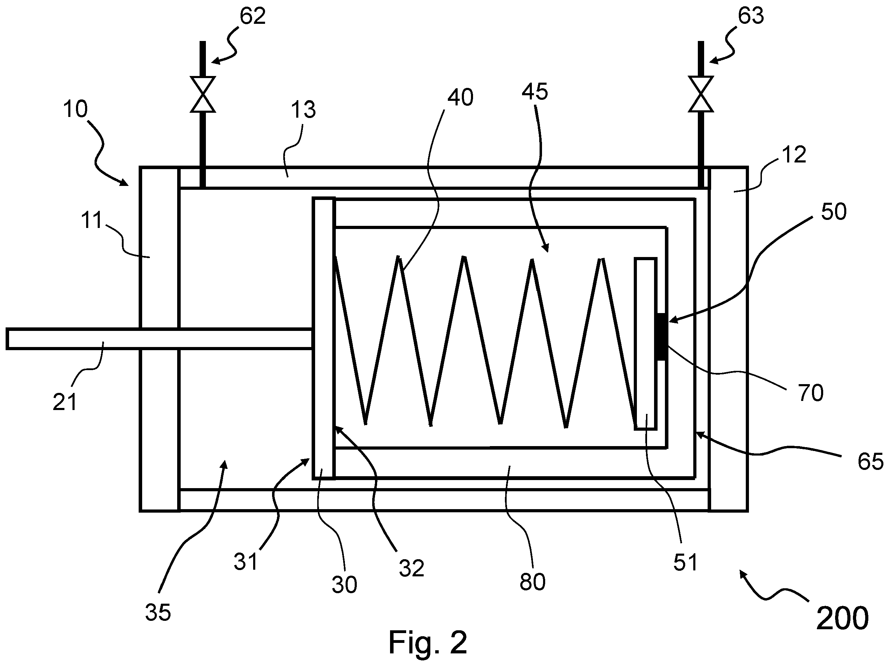

The first plate 30 is slidably housed in the cylinder 10 and is configured to define a first variable volume chamber 35 between the first side 31 and the first end wall 11; advantageously, the first variable volume chamber 35 is configured to be filled by a fluid, in particular a pressurized fluid. With non-limiting reference to Figs. 1 and 2, advantageously the actuator 100 and 200 further comprises a second fluid circuit 62 which is configured to supply the fluid in the first variable volume chamber 35. In particular, the fluid supplied in the first variable volume chamber 35 is configured to apply a pressure force (which is referred to as "fifth force" in the following) on the first plate 30. As it will be better explained in the following, the position of the first plate 30 inside the cylinder 10 depends on the volume of the first variable volume chamber 35.

The first plate 30 has further a second side 32, opposite to the first side 31, which is mechanically coupled to an elastic element 40, for example one or more helical springs or cup springs or any other type of spring and arrangement suitable to perform the same functions as taught herein; in particular, the elastic element 40 is housed inside the cylinder 10. The elastic element 40 has further a second end which is mechanically coupled to the second end wall 12 of the cylinder 10; please note that, as it will be apparent from the following, the elastic element 40 may be directly or indirectly coupled to the second end wall 12. The elastic element 40 is configured to apply a first force on the first plate 30, in order to move the first plate 30, and a second force on the second end wall 12, the second force being equal and opposite to the first force. The innovative hydraulic actuator 100 and 200 further comprises a testing system 50 for measuring the second force applied by the elastic element 40 or a third force which is related to the second force and which will be better described in the following.

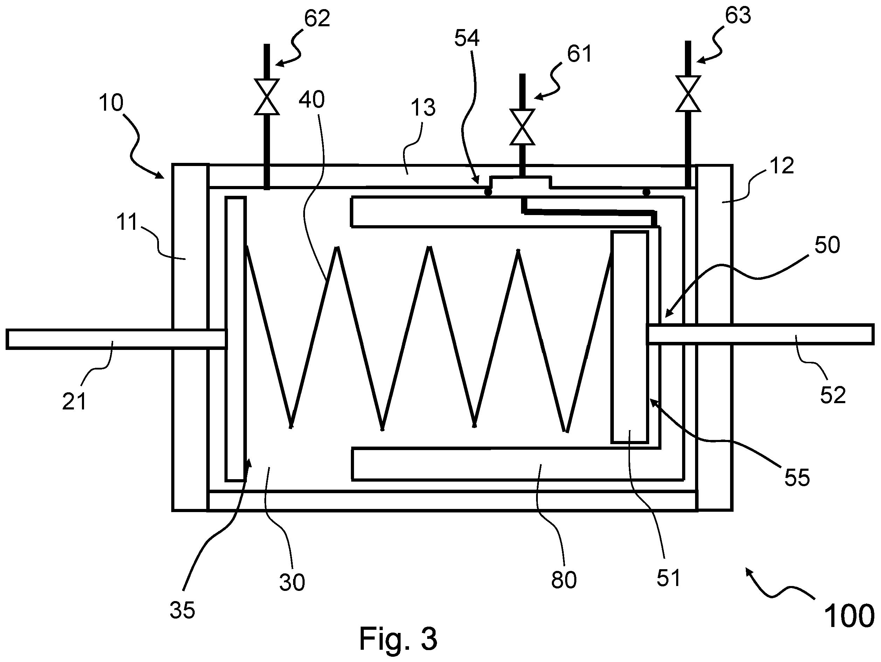

It is to be noted that, when the first variable volume chamber 35 is filled with pressurized fluid at a certain pressure, the first force applied by the elastic element 40 on the second side 32 of the first plate 30 is counteracted by the pressure force of the fluid on the first side 31 of the first plate 30, so that the first plate 30 - and therefore also the first rod 21 - does not move (this can be referred to as a "pre-operating phase", see e.g. Figs. 1 and 2). However, when the pressure inside the first variable volume chamber 35 drops, e.g. by draining the fluid from the first variable volume chamber 35, the first force on the second side 32 is higher than the pressure force on the first side 31 and the first plate 30 - and therefore also the first rod 21 - can move, pushed by the elastic element 40 (this can be referred to as an "operating phase", see e.g. Fig. 3).

With non-limiting reference to the embodiments shown in Fig. 1 and Fig. 2, the testing system 50 comprises a second plate 51 which is located between the elastic element 40 and the second end wall 12; in particular, the second plate 51 is mechanically coupled to the second end of the elastic element 40. Advantageously, the second plate 51 is configured to press (directly or indirectly) the second end wall 12 due to the second force.

According to a first possibility, as shown in Fig. 1, the testing system 50 further comprises a second rod 52 which is slidably and partially housed inside the cylinder 10 and which is mechanically coupled to the second plate 51. Advantageously, the second rod 52 is configured to partially protrude from the second end wall 12, for example from a hole of the second end wall 12. In particular, the portion of the second rod 52 which protrudes from the second end wall 12 may vary depending on the forces applied on the second plate 51.

With non-limiting reference to Fig. 1, the testing system 50 further comprises a first fluid circuit 61 and a second variable volume chamber 55 located between the second plate 51 and the second end wall 12. According to a first possibility, the second variable volume chamber 55 is defined by the second plate 51 and the second end wall 12. Advantageously, the first fluid circuit 61 passes through the lateral wall 13 of the cylinder and is configured to supply fluid, in particular pressurized fluid, in the second variable volume chamber 55. It is to be noted that, when the second variable volume chamber 55 is filled with fluid at a certain pressure, the fluid supplied is configured to apply a fourth force on the second plate 51 in order to move the second plate 51, in particular to move the second plate 51 away from the second end wall 12. Advantageously, the second plate 51 is configured to move when the fourth force acting on the second plate 51 due to the fluid is greater, in particular is greater in absolute value, than the second or third force due to the elastic element 40.

Advantageously, the portion of the second rod 52 which protrudes from the second end wall 12 varies depending on the fourth force acting on the second plate 51. It is to be noted that the fourth force acting on the second plate 51 is opposite to the second or third force acting on the second plate 51 due to the elastic element 40. By measuring the portion of the second rod 52 which protrudes from the second end wall 12, which depends on the fourth force (and therefore on the pressure of the fluid in the second variable volume chamber 55), one can measure the elastic force of the elastic element 40 without moving the first plate 30, i.e. without moving the spindle of the valve to close totally or partially the valve.

According to the invention, with non-limiting reference to Fig. 1 and Fig. 2, the actuator 100 and 200 further comprises a cup 80 which is particularly advantageous to speed up the actuation of the valve, in particular the moving of the first plate 30. The cup 80 has a lateral wall and an end wall mechanically connected to each other and the lateral wall is arranged so that a lateral wall edge abut against the second side of the first plate 30 in order to define an inner chamber 45, in particular a closed inner chamber 45. Advantageously, the elastic element 40 is housed in the inner chamber 45 and the second end of the elastic element 40 is mechanically coupled to the end wall of the cup 80. In other words, the end wall of the cup 80 is located between the second plate 51 and the second end wall 12 and the second variable volume chamber 55 is defined by the second plate 51 and the end wall of the cup 80. According to this possibility, the elastic element 40 is configured to apply a third force to the end wall of the cup 80, which in particular is the force acting on the end wall of the cup equal and opposite to the first force acting on the first plate 30.

Advantageously, a portion of the first fluid circuit 61 crosses the lateral wall of the cup 80, in order to supply fluid, in particular pressurized fluid, in the second variable volume chamber 55. According to the example shown in Fig. 1, a first portion of the first fluid circuit 61 crosses the lateral wall 13 of the cylinder 10 and is configured to supply fluid to a gap or chamber located between the lateral wall 13 of the cylinder 10 and the lateral wall of the cup 80; advantageously, a second portion of the first fluid circuit 61 crosses the lateral wall of the cup 80 in order to fluidly couple the gap or chamber and the second variable volume chamber 55 and therefore to allow the supplying of fluid into the second variable volume chamber 55. Advantageously, at least one seal 54 is located between the lateral wall 13 of the cylinder 10 and the lateral wall of the cup 80; in particular, the least one seal 54 is arranged around the first fluid circuit 61 in order to fluidly isolate the gap or chamber.

The second embodiment shown in Fig. 2 is similar to the first embodiment shown in Fig. 1 but the testing system 50 of the actuator 200 differs from the testing system 50 of the actuator 100 in that it comprises at least one loading sensor 70, which as a non-limiting example could be a load cell or strain gauge, configured to measure the second or third force due to the elastic element 40. In particular, the at least one loading sensor 70 can be placed on the second plate 51 or placed on the second end wall 12 or located between the second plate 51 and the second end wall 12, for example on the end wall of the cup 80. Advantageously, the testing system 50 comprises a set of loading sensors 70 configured to ensure stable support of the second plate 51; for example, the testing system may have three loading sensor 70 spaced apart, e.g. arranged at 120° from each other. In particular, each loading sensor 70 is configured to measure a part of the second or third force. It is to be noted that the measurement of the second or third force may be carried out continuously or when desired. The loading sensor(s) 70 may be wireless sensor(s) (as shown in the embodiment of Fig. 2) or wired sensor(s); in case of wired sensor(s), which requires electrical wiring, the wires can pass through a rigid rod (similar to rod 52 shown in the embodiment of Fig. 1) to bring the signal out of the cylinder 10.

As already mentioned above, the cup 80 is particularly advantageous to speed up the actuation of the valve, in particular the moving of the first plate 30. In fact, with non-limiting reference to Fig. 3, when the actuator passes from a pre-operating phase to an operating phase, i.e. when the first force acting on the first plate 30 due to the elastic element 40 is greater than the fifth force acting on the first plate 30 due to the fluid in the first variable volume chamber 35, the first plate 50 starts to move and to be spaced apart from the lateral wall edge of the cup 80. Advantageously, the fluid may leakage from the first variable volume chamber 35 to the inner chamber 45, causing a more rapid pressure drop in the first variable volume chamber 35 and therefore a more rapid drop of the fifth force acting on the first plate 30.

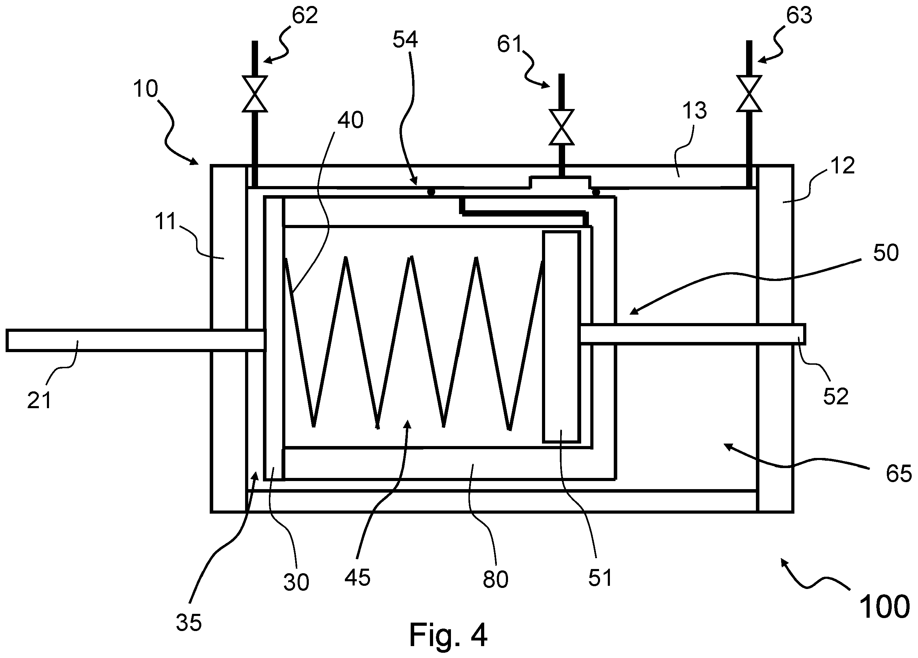

Moreover, the cup 80 is advantageous for example also in a "preparation phase" of the actuator 100 and 200. With non-limiting reference to Fig. 4, it is shown the embodiment of Fig. 1 after being passed from a pre-operating phase to an operating phase (see e.g. Fig. 3) and then from an operating phase to a preparation phase: when the valve is closed (operating phase), i.e. when the first plate 30 has reached its stroke end, for example by abutting against the first end wall 11, the actuator 100 may be carried over to the pre-operating phase by moving the cup 80 in order to make the lateral wall edge of the cup 80 abut against the first plate 30 (thus loading the elastic element 40 at the same time) and then moving together the cup 80 and the first plate 30 back to the pre-operating phase position. Advantageously, the moving of the cup 80 may be carried out by supplying a fluid, in particular a pressurized fluid, in a third variable volume chamber 65, through for example a third fluid circuit 63. Please note that the third fluid circuit 63 may be fluidly coupled to the first fluid circuit 61 or the second fluid circuit 62. In particular, the third variable volume chamber 65 is defined between the end wall of the cup 80 and the second end wall 12 of the cylinder 10. Once that the lateral wall edge of the cup 80 abuts against the first plate 30, the first variable volume chamber 35 may be filled by a fluid, in particular a pressurized fluid and, preferably at the same time, the third variable volume chamber 65 is drained by the fluid, so that both the cup 80 and the first plate 30 may be moved back to the pre-operating phase position.

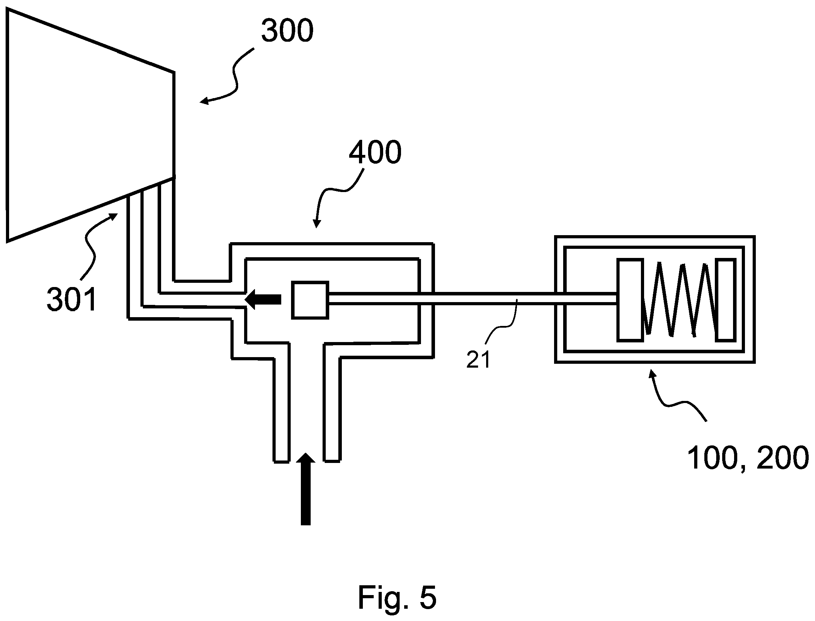

According to another aspect, the subject-matter disclosed herein relates to a turbo-expander system (show e.g. in Fig. 5) which comprises an innovative hydraulic or pneumatic actuator 100 and 200 as described above. The system is illustrated in Fig. 5. The system further comprises a turbo-expander machine 300, for example a steam turbine, which has fluid inlet 301 for the supplying of fluid to the machine 300, and a valve 400, in particular a trip valve, which is fluidly coupled to the fluid inlet 301 and which is configured to be actuated by the actuator 100 and 200 in order to stop the fluid supply to the fluid inlet 301. The innovative hydraulic or pneumatic actuator 100 and 200 comprises a testing system 50 which is configured to operate, in particular to measure the elastic force of the elastic element 40 of the actuator 100 and 200, without actuating the valve 400, i.e. without closing totally or partially the fluid inlet 301 for supplying fluid to the machine 300.

## Claims

1. A hydraulic or pneumatic actuator (100, 200) for a valve, in particular a trip valve, the actuator (100, 200) being housed into a cylinder (10) comprising a lateral wall (13), a first end wall (11) and a second end wall (12) and comprising:
- a first rod (21) being slidably and partially housed inside the cylinder, and having a first end configured to be mechanically coupled to a spindle of the valve;
- a first plate (30) being slidably housed in the cylinder (10) and having a first side (31) and a second side (32), wherein the first side (31) is mechanically coupled to a second end of the first rod (21) and is configured to define a first variable volume chamber (35) between the first side (31) and the first end wall (11);
- an elastic element (40) being housed in the cylinder (10) and having a first end mechanically coupled to the second side (32) of the first plate (30) and a second end mechanically coupled to the second end wall (12) of the cylinder (10), wherein the elastic element (40) is configured to apply a first force on the first plate (30), in order to move the first plate (30), and a second force on the second end wall (12), the second force being equal and opposite to the first force;
wherein the hydraulic or pneumatic actuator (100, 200) further comprises a testing system (50) for measuring the second force or a third force related to the second force;
**characterized by** a cup (80) having a lateral wall and an end wall,
wherein a lateral wall edge is configured to abut against the second side of the first plate (30) and to define an inner chamber (45).

2. The actuator (100, 200) of claim 1, wherein the testing system (50) comprises a second plate (51) which is located between the elastic element (40) and the second end wall (12),
wherein the second plate (51) is configured to press the second end wall (12) due to the second force.

3. The actuator (100) of claim 2, wherein the testing system (50) further comprises a first fluid circuit (61) and a second variable volume chamber (55) located between the second plate (51) and the second end wall (12),
wherein the first fluid circuit (61) is configured to supply fluid in the second variable volume chamber (55),
wherein the fluid supplied is configured to apply a fourth force on the second plate (51) in order to move the second plate (51), and
wherein the second plate (51) is configured to move when the fourth force acting on the second plate (51) due to the fluid is greater than the second or third force due to the elastic element (40).

4. The actuator (100) of claim 3, wherein the testing system (50) further comprises a second rod (52) mechanically coupled to the second plate (51), wherein the second rod (52) is slidably and partially housed inside the cylinder (10),
wherein the second rod (52) is configured to partially protrude from the second end wall (12).

5. The actuator (100) of claim 4, wherein the portion of the second rod (52) which protrudes from the second end wall (12) is configured to vary depending on the fourth force acting on the second plate (51).

6. The actuator (200) of claim 2, wherein the testing system (50) further comprises at least one loading sensor (70) placed on the second plate (51) or placed on the second end wall (12), or located between the second plate (51) and the second end wall (12),
wherein the at least one loading sensor (70) is configured to measure the second or third force due to the elastic element (40).

7. The actuator (200) of claim 6, wherein the testing system (50) comprises a set of loading sensors (70), each loading sensor (70) being configured to measure a part of the second or third force, the set of loading sensors (70) being configured to ensure stable support of the second plate (51).

8. The actuator (200) of claim 6 or 7, wherein the measurement of the second or third force is carried out continuously.

9. The actuator (100, 200) of claim 1, wherein the elastic element (40) is housed in the inner chamber (45), and
wherein the second end of the elastic element (40) is mechanically coupled to the end wall of the cup (80).

10. The actuator (100) of claim 3 , wherein a portion of the first fluid circuit (61) crosses the lateral wall of the cup (80).

11. The actuator (100) of claim 10, further comprising at least one seal (54), wherein the seal (54) is located between the lateral wall (13) of the cylinder (10) and the lateral wall of the cup (80),
wherein the seal (54) is arranged around the first fluid circuit (61).

12. The actuator (100, 200) of claim 1, further comprising a second fluid circuit (62) which is configured to supply fluid in the first variable volume chamber (35), wherein the fluid supplied is configured to apply a fifth force on the first plate (30), the fifth force being opposite to the first force.

13. A turbo-expander system comprising:
- a hydraulic or pneumatic actuator (100, 200) according to claim 1,
- a turbo-expander machine (300) having a fluid inlet (301),
- a valve (400), in particular a trip valve, fluidly coupled to the fluid inlet (301) and configured to be actuated in order to stop the fluid supply to the fluid inlet (301),
wherein the valve (400) is mechanically coupled to the actuator (100, 200), wherein the testing system (50) is configured to operate without actuating the valve (400).

## Patentansprüche

1. Hydraulischer oder pneumatischer Stellantrieb (100, 200) für ein Ventil, insbesondere ein Auslöseventil, wobei der Stellantrieb (100, 200) in einem Zylinder (10) untergebracht ist, der eine Seitenwand (13), eine erste Stirnwand (11) und eine zweite Stirnwand (12) umfasst, und umfassend:
- eine erste Stange (21), die verschiebbar und teilweise innerhalb des Zylinders untergebracht ist und ein erstes Ende aufweist, das konfiguriert ist, um mechanisch mit einer Spindel des Ventils gekoppelt zu werden;
- eine erste Platte (30), die verschiebbar in dem Zylinder (10) untergebracht ist und eine erste Seite (31) und eine zweite Seite (32) aufweist, wobei die erste Seite (31) mechanisch mit einem zweiten Ende der ersten Stange (21) gekoppelt ist und konfiguriert ist, um eine erste Kammer (35) mit variablem Volumen zwischen der ersten Seite (31) und der ersten Stirnwand (11) zu definieren;
- ein elastisches Element (40), das in dem Zylinder (10) untergebracht ist und ein erstes Ende, das mechanisch mit der zweiten Seite (32) der ersten Platte (30) gekoppelt ist, und ein zweites Ende aufweist, das mechanisch mit der zweiten Stirnwand (12) des Zylinders (10) ist, wobei das elastische Element (40) konfiguriert ist, um eine erste Kraft auf die erste Platte (30) auszuüben, um die erste Platte (30) zu bewegen, und eine zweite Kraft auf die zweite Stirnwand (12) auszuüben, wobei die zweite Kraft gleich und entgegengesetzt zu der ersten Kraft ist;
wobei der hydraulische oder pneumatische Stellantrieb (100, 200) ferner ein Testsystem (50) zum Messen der zweiten Kraft oder einer dritten Kraft, die mit der zweiten Kraft in Beziehung steht, umfasst;
**gekennzeichnet durch** einen Becher (80) mit einer Seitenwand und einer Stirnwand,
wobei eine Seitenwandkante konfiguriert ist, um an der zweiten Seite der ersten Platte (30) anzuliegen und eine innere Kammer (45) zu definieren.

2. Stellantrieb (100, 200) nach Anspruch 1, wobei das Testsystem (50) eine zweite Platte (51) umfasst, die zwischen dem elastischen Element (40) und der zweiten Stirnwand (12) angeordnet ist,
wobei die zweite Platte (51) konfiguriert ist, um unter Einwirkung der zweiten Kraft gegen die zweite Stirnwand (12) zu drücken.

3. Stellantrieb (100) nach Anspruch 2, wobei das Testsystem (50) ferner einen ersten Fluidkreislauf (61) und eine zweite Kammer (55) mit variablem Volumen umfasst, die sich zwischen der zweiten Platte (51) und der zweiten Stirnwand (12) befindet,
wobei der erste Fluidkreislauf (61) konfiguriert ist, um Fluid in die zweite Kammer (55) mit variablem Volumen zu leiten,
wobei das zugeführte Fluid konfiguriert ist, um eine vierte Kraft auf die zweite Platte (51) auszuüben, um die zweite Platte (51) zu bewegen, und
wobei die zweite Platte (51) konfiguriert ist, um sich zu bewegen, wenn die vierte Kraft, die unter Einwirkung des Fluids auf die zweite Platte (51) wirkt, größer ist als die unter Einwirkung des elastischen Elements (40) ausgeübte zweite oder dritte Kraft.

4. Stellantrieb (100) nach Anspruch 3, wobei das Testsystem (50) ferner eine zweite Stange (52) umfasst, die mechanisch mit der zweiten Platte (51) gekoppelt ist,
wobei die zweite Stange (52) verschiebbar und teilweise innerhalb des Zylinders (10) untergebracht ist,
wobei die zweite Stange (52) konfiguriert ist, um teilweise aus der zweiten Stirnwand (12) herauszuragen.

5. Stellantrieb (100) nach Anspruch 4, wobei der Abschnitt der zweiten Stange (52), der aus der zweiten Stirnwand (12) herausragt, konfiguriert ist, um in Abhängigkeit von der vierten Kraft, die auf die zweite Platte (51) wirkt, zu variieren.

6. Stellantrieb (200) nach Anspruch 2, wobei das Testsystem (50) ferner mindestens einen Lastsensor (70) umfasst, der auf der zweiten Platte (51) oder auf der zweiten Stirnwand (12) angeordnet ist, oder zwischen der zweiten Platte (51) und der zweiten Stirnwand (12) angeordnet ist,
wobei der mindestens eine Lastsensor (70) konfiguriert ist, um die durch das elastische Element (40) ausgeübte zweite oder dritte Kraft zu messen.

7. Stellantrieb (200) nach Anspruch 6, wobei das Testsystem (50) einen Satz von Lastsensoren (70) umfasst, wobei jeder Lastsensor (70) konfiguriert ist, um einen Teil der zweiten oder dritten Kraft zu messen, wobei der Satz von Lastsensoren (70) konfiguriert ist, um eine stabile Abstützung der zweiten Platte (51) sicherzustellen.

8. Stellantrieb (200) nach Anspruch 6 oder 7, wobei die Messung der zweiten oder dritten Kraft kontinuierlich durchgeführt wird.

9. Stellantrieb (100, 200) nach Anspruch 1, wobei das elastische Element (40) in der inneren Kammer (45) untergebracht ist und
wobei das zweite Ende des elastischen Elements (40) mechanisch mit der Stirnwand des Bechers (80) gekoppelt ist.

10. Stellantrieb (100) nach Anspruch 3, wobei ein Abschnitt des ersten Fluidkreislaufs (61) die Seitenwand des Bechers (80) kreuzt.

11. Stellantrieb (100) nach Anspruch 10, ferner umfassend mindestens eine Dichtung (54), wobei sich die Dichtung (54) zwischen der Seitenwand (13) des Zylinders (10) und der Seitenwand des Bechers (80) befindet,
wobei die Dichtung (54) um den ersten Fluidkreislauf (61) herum angeordnet ist.

12. Stellantrieb (100, 200) nach Anspruch 1, ferner umfassend einen zweiten Fluidkreislauf (62), der konfiguriert ist, um Fluid in die erste Kammer (35) mit variablem Volumen zu leiten, wobei das zugeführte Fluid konfiguriert ist, um eine fünfte Kraft auf die erste Platte (30) auszuüben, wobei die fünfte Kraft der ersten Kraft entgegengesetzt ist.

13. Turboexpandersystem, umfassend:
- einen hydraulischen oder pneumatischen Stellantrieb (100, 200) nach Anspruch 1,
- eine Turboexpandermaschine (300) mit einem Fluideinlass (301),
- ein Ventil (400), insbesondere ein Auslöseventil, das strömungstechnisch mit dem Fluideinlass (301) gekoppelt ist und konfiguriert ist, um betätigt werden zu können, um die Fluidzufuhr zu dem Fluideinlass (301) zu stoppen,
wobei das Ventil (400) mechanisch mit dem Stellantrieb (100, 200) gekoppelt ist, wobei das Testsystem (50) konfiguriert ist, um ohne Betätigung des Ventils (400) zu arbeiten.

## Revendications

1. Actionneur hydraulique ou pneumatique (100, 200) pour une vanne, en particulier une vanne de déclenchement, l'actionneur (100, 200) étant logé dans un cylindre (10) comprenant une paroi latérale (13), une première paroi d'extrémité (11) et une seconde paroi d'extrémité (12) et comprenant :
- une première tige (21) étant logée de manière coulissante et partiellement à l'intérieur du cylindre, et ayant une première extrémité conçue pour être accouplée mécaniquement à un axe de la vanne ;
- une première plaque (30) étant logée de manière coulissante dans le cylindre (10) et ayant un premier côté (31) et un second côté (32), dans lequel le premier côté (31) est accouplé mécaniquement à une seconde extrémité de la première tige (21) et est conçu pour définir une première chambre à volume variable (35) entre le premier côté (31) et la première paroi d'extrémité (11) ;
- un élément élastique (40) étant logé dans le cylindre (10) et ayant une première extrémité accouplée mécaniquement au second côté (32) de la première plaque (30) et une seconde extrémité accouplée mécaniquement à la seconde paroi d'extrémité (12) du cylindre (10), dans lequel l'élément élastique (40) est conçu pour appliquer une première force sur la première plaque (30), afin de déplacer la première plaque (30), et une deuxième force sur la seconde paroi d'extrémité (12), la deuxième force étant égale et opposée à la première force ;
dans lequel l'actionneur hydraulique ou pneumatique (100, 200) comprend en outre un système de test (50) pour mesurer la deuxième force ou une troisième force liée à la deuxième force ;
**caractérisé par** une coupelle (80) ayant une paroi latérale et une paroi d'extrémité,
dans lequel un bord de paroi latéral est conçu pour venir en butée contre le second côté de la première plaque (30) et pour définir une chambre interne (45).

2. Actionneur (100, 200) selon la revendication 1, dans lequel le système de test (50) comprend une seconde plaque (51) qui est située entre l'élément élastique (40) et la seconde paroi d'extrémité (12),
dans lequel la seconde plaque (51) est conçue pour presser la seconde paroi d'extrémité (12) en raison de la deuxième force.

3. Actionneur (100) selon la revendication 2, dans lequel le système de test (50) comprend en outre un premier circuit de fluide (61) et une seconde chambre à volume variable (55) située entre la seconde plaque (51) et la seconde paroi d'extrémité (12),
dans lequel le premier circuit de fluide (61) est conçu pour fournir du fluide dans la seconde chambre à volume variable (55),
dans lequel le fluide fourni est conçu pour appliquer une quatrième force sur la seconde plaque (51) afin de déplacer la seconde plaque (51), et
dans lequel la seconde plaque (51) est conçue pour se déplacer lorsque la quatrième force agissant sur la seconde plaque (51) en raison du fluide est supérieure à la deuxième ou troisième force due à l'élément élastique (40).

4. Actionneur (100) selon la revendication 3, dans lequel le système de test (50) comprend en outre une seconde tige (52) accouplée mécaniquement à la seconde plaque (51),
dans lequel la seconde tige (52) est logée de manière coulissante et partiellement à l'intérieur du cylindre (10),
dans lequel la seconde tige (52) est conçue pour faire partiellement saillie depuis la seconde paroi d'extrémité (12).

5. Actionneur (100) selon la revendication 4, dans lequel la partie de la seconde tige (52) qui fait saillie depuis la seconde paroi d'extrémité (12) est conçue pour varier en fonction de la quatrième force agissant sur la seconde plaque (51).

6. Actionneur (200) selon la revendication 2, dans lequel le système de test (50) comprend en outre au moins un capteur de charge (70) placé sur la seconde plaque (51) ou placé sur la seconde paroi d'extrémité (12), ou situé entre la seconde plaque (51) et la seconde paroi d'extrémité (12),
dans lequel l'au moins un capteur de charge (70) est configuré pour mesurer la deuxième ou troisième force due à l'élément élastique (40).

7. Actionneur (200) selon la revendication 6, dans lequel le système de test (50) comprend un ensemble de capteurs de charge (70), chaque capteur de charge (70) étant configuré pour mesurer une partie de la deuxième ou troisième force, l'ensemble de capteurs de charge (70) étant configuré pour assurer un support stable de la seconde plaque (51).

8. Actionneur (200) selon la revendication 6 ou 7, dans lequel la mesure de la deuxième ou troisième force est effectuée en continu.

9. Actionneur (100, 200) selon la revendication 1, dans lequel l'élément élastique (40) est logé dans la chambre interne (45), et
dans lequel la seconde extrémité de l'élément élastique (40) est accouplée mécaniquement à la paroi d'extrémité de la coupelle (80).

10. Actionneur (100) selon la revendication 3, dans lequel une partie du premier circuit de fluide (61) traverse la paroi latérale de la coupelle (80).

11. Actionneur (100) selon la revendication 10, comprenant en outre au moins un joint d'étanchéité (54), dans lequel le joint d'étanchéité (54) est situé entre la paroi latérale (13) du cylindre (10) et la paroi latérale de la coupelle (80),
dans lequel le joint d'étanchéité (54) est agencé autour du premier circuit de fluide (61).

12. Actionneur (100, 200) selon la revendication 1, comprenant en outre un second circuit de fluide (62) qui est conçu pour fournir du fluide dans la première chambre à volume variable (35), dans lequel le fluide fourni est conçu pour appliquer une cinquième force sur la première plaque (30), la cinquième force étant opposée à la première force.

13. Système de turbodétendeur comprenant :
- un actionneur hydraulique ou pneumatique (100, 200) selon la revendication 1,
- une machine de turbodétendeur (300) ayant une entrée de fluide (301),
- une vanne (400), en particulier une vanne de déclenchement, accouplée fluidiquement à l'entrée de fluide (301) et conçue pour être actionnée afin d'arrêter l'alimentation en fluide de l'entrée de fluide (301),
dans lequel la vanne (400) est accouplée mécaniquement à l'actionneur (100, 200), dans lequel le système de test (50) est conçu pour fonctionner sans actionner la vanne (400).
